# EUROPEAN PATENT SPECIFICATION

(11) **EP 2 763 373 B1**
(45) Date of publication and mention of the grant of the patent: **01.08.2018**
(21) Application number: 14153152.5
(22) Date of filing: 30.01.2014
(51) Int. Cl.: H04L 29/06, H04L 12/58, H04L 29/08, H04W 4/02

(54) **MOBILE TERMINAL AND CONTROLLING METHOD THEREOF**
MOBILES ENDGERÄT UND STEUERUNGSVERFAHREN DAFÜR
TERMINAL MOBILE ET SON PROCÉDÉ DE CONTRÔLE

(30) Priority: 01.02.2013 KR 20130011752
(43) Date of publication of application: 06.08.2014
(73) Proprietor: LG Electronics Inc., Seoul 07336 (KR)
(72) Inventor: Yang, Yoonseok, 137-893 Seoul (KR); Na, Sungchae, 137-893 Seoul (KR)
(74) Representative: Ter Meer Steinmeister & Partner

(56) References cited:
- US-A1- 2009 061 835
- US-A1- 2009 327 885
- US-A1- 2012 246 244
- US-A1- 2012 324 589
- HOMANYI G ET AL: "Distributed audio recorder using smart phones and proximity connections", COMPUTER STANDARDS AND INTERFACES, ELSEVIER SEQUOIA. LAUSANNE, CH, vol. 33, no. 3, 1 March 2011 (2011-03-01), pages 315-324, XP027557866, ISSN: 0920-5489 [retrieved on 2010-08-26]

## Description

### BACKGROUND

### 1. Field

The present disclosure relates to a mobile terminal, and more particularly, to a mobile terminal and controlling method thereof. Although the present disclosure is suitable for a wide scope of applications, it is particularly suitable for sharing such a content created in the course of meeting a counterpart as a photo, a video and the like with the counterpart more conveniently.

### 2. Background

Generally, terminals can be classified into mobile/portable terminals and stationary terminals. The mobile terminals can be further classified into handheld terminals and vehicle mount terminals according to possibility of user's direct portability.

As functions of the terminal are getting diversified, the terminal tends to be implemented as a multimedia player provided with composite functions such as photographing of photos or videos, playback of music or video files, game play, broadcast reception and the like for example.

US 2012/0246244 A1 discloses systems and methods for forming of user device groups. A message including location information indicating a geographic location of a first user device is received from the first user device. Values representing logical connection strengths between the first user device and other user devices are calculated using the location information. A first device group is determined for the first user device based on the calculating of the values representing the logical connection strengths, the first device group including a plurality of the other user devices.

US 2009/0061835 A1 discloses an approach for providing sharing of content relating to an event. Detection of a plurality of mobile communication devices within a predetermined location is performed. An event is identified corresponding to the predetermined location and a current time. The mobile communication devices are notified to enable exchange of content about the event. The content is received from one or more of the mobile communication devices, wherein the content is accessible by the mobile communication devices.

US 2012/0324589 A1 discloses content sharing using event notifications that include a global identifier and a private identifier. The event notifications are sent to potential participants to an event. Potential participants that accept the event notification or otherwise request to join the event use the private identifier to submit content to a content sharing service. Based at least on the private identifiers associated with event participants, the content from event participants is selectively shared among the other event participants.

US 2009/0327885 A1 discloses a system and method that includes capturing content active in a device, identifying at least one target device to which the captured content is to be uploaded, and automatically uploading the content to the at least one other target device if a content sharing module in the device is active.

"Distributed audio recorder using smart phones and proximity connections",COMPUTER STANDARDS AND INTERFACES, ISSN: 0920-5489; discloses a collaborative system between smart-phones to audio-record a meeting. Sharing of the recorded audio pieces may happen after the meeting.

To support and increase the terminal functions, it may be able to consider the improvement of structural parts and/or software parts of the terminal.

Recently, contents are frequently created and shared using a mobile terminal of a smart type. Particularly, while users having mobile terminals are meeting each other, they create contents such as photos, videos and the like in a manner of photographing each other. After the meeting, the demand for sharing the created contents with each other tends to rise. Thus, it is necessary to provide a method of sharing a content created in the course of a meeting more conveniently.

### BRIEF DESCRIPTION OF THE DRAWINGS

The embodiments will be described in detail with reference to the following drawings in which like reference numerals refer to like elements, wherein:
Figure 1 is a block diagram of a mobile terminal according to one embodiment of the present disclosure;
Figure 2 is a front perspective diagram of a mobile terminal according to one embodiment of the present disclosure;
Figure 3 is a flowchart for one example of a method of sharing a content created in a mobile terminal according to one embodiment of the present disclosure;
Figure 4 is a diagram for one example of a method of selecting a sharing target terminal through a schedule management in a mobile terminal according to one embodiment of the present disclosure;
Figure 5 is a diagram for one example of a method of selecting a sharing target terminal through a phonebook in a mobile terminal according to one embodiment of the present disclosure;
Figure 6 is a diagram for one example of an operation by a method of selecting a sharing target terminal in a mobile terminal according to one embodiment of the present disclosure;
Figure 7 is a diagram for one example of a method of transmitting a created content to a sharing target terminal after completion of an event in a mobile terminal according to one embodiment of the present disclosure;
Figure 8 is a diagram for one example of a method of receiving a created content from a sharing target terminal after completion of an event in a mobile terminal according to one embodiment of the present disclosure;
Figure 9 is a diagram for one example of a method of sharing a content with a plurality of sharing target terminals after completion of an event in a mobile terminal according to one embodiment of the present disclosure;
Figure 10 is a diagram for one example of a configuration for displaying a sharing target content in a mobile terminal according to one embodiment of the present disclosure;
Figure 11 is a diagram for one example of a configuration for displaying a sharing target content per contact in a mobile terminal according to one embodiment of the present disclosure;
Figure 12 is a diagram for one example of a configuration for displaying side information of a sharing target content in a mobile terminal according to one embodiment of the present disclosure;
Figure 13 is a diagram for one example of a configuration for displaying a sharing target content per event place in a mobile terminal according to one embodiment of the present disclosure; and
Figure 14 is a diagram for one example of a configuration for displaying a sharing target content differently depending on whether the sharing target terminal is shared in a mobile terminal according to one embodiment of the present disclosure.

### DETAILED DESCRIPTION OF THE INVENTION

In the following detailed description, reference is made to the accompanying drawing figures which form a part hereof, and which show by way of illustration specific embodiments of the disclosure. It is to be understood by those of ordinary skill in this technological field that other embodiments may be utilized, and structural, electrical, as well as procedural changes may be made without departing from the scope of the present disclosure. Wherever possible, the same reference numbers will be used throughout the drawings to refer to the same or similar parts.

As used herein, the suffixes 'module', 'unit' and 'part' are used to denote elements in order to facilitate the disclosure only. Therefore, significant meanings or roles are not given to the suffixes themselves, and it is understood that the suffixes 'module', 'unit' and 'part' can be used together or interchangeably.

Features of embodiments of the present disclosure are applicable to various types of terminals. Examples of such terminals include mobile terminals, such as mobile phones, user equipment, smart phones, mobile computers, digital broadcast terminals, personal digital assistants, portable multimedia players (PMP) and navigators. However, by way of non-limiting example only, further description will be with regard to a mobile terminal 100, and it should be noted that such teachings may apply equally to other types of terminals such as digital TV, desktop computers and so on.

Accordingly, the present disclosure is directed to a mobile terminal and controlling method thereof that substantially obviate one or more problems due to limitations and disadvantages of the related art.

One object of the present disclosure is to provide a mobile terminal and controlling method thereof, by which a content created in the course of a meeting can be shared with a counterpart more conveniently.

Particularly, the object of the present disclosure is to provide a mobile terminal and controlling method thereof. To this end, the present disclosure determines whether there is a meeting with a counterpart in accordance with a schedule or a location of the counterpart. As a result, contents are created in a time for which the meeting was determined as occurring and can be then shared more conveniently.

Technical tasks obtainable from the present disclosure are non-limited by the above-mentioned technical tasks. And, other unmentioned technical tasks can be clearly understood from the following description by those having ordinary skill in the technical field to which the present disclosure pertains.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings. The invention is defined by claims 1 and 8 and their dependent claims.

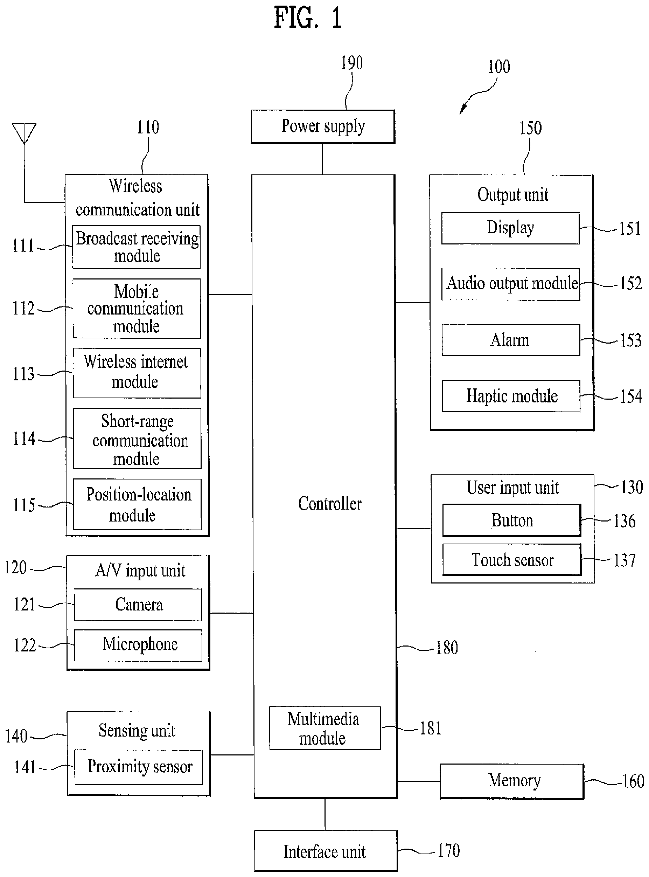

Figure 1 is a block diagram of a mobile terminal 100 in accordance with an embodiment of the present disclosure. With reference to Figure 1, the mobile terminal 100 includes a wireless communication unit 110, an A/V (audio/video) input unit 120, a user input unit 130, a sensing unit 140, an output unit 150, a memory 160, an interface unit 170, a controller 180, and a power supply unit 190. Figure 1 shows the mobile terminal 100 having various components, but implementing all of the illustrated components is not a requirement. More or fewer components may be implemented according to various embodiments.

The wireless communication unit 110 typically includes one or more components which permit wireless communication between the mobile terminal 100 and a wireless communication system or network within which the mobile terminal 100 is located. For instance, the wireless communication unit 110 can include a broadcast receiving module 111, a mobile communication module 112, a wireless Internet module 113, a short-range communication module 114, and a position-location module 115.

The broadcast receiving module 111 receives a broadcast signal and/or broadcast associated information from an external broadcast managing server via a broadcast channel. The broadcast channel may include a satellite channel and a terrestrial channel. At least two broadcast receiving modules 111 can be provided in the mobile terminal 100 to facilitate simultaneous reception of at least two broadcast channels or broadcast channel switching.

The broadcast managing server is generally a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and/or a data broadcast signal, among other signals. If desired, the broadcast signal may further include a broadcast signal combined with a TV or radio broadcast signal.

The broadcast associated information includes information associated with a broadcast channel, a broadcast program, or a broadcast service provider. Furthermore, the broadcast associated information can be provided via a mobile communication network. In this instance, the broadcast associated information can be received by the mobile communication module 112.

The broadcast associated information can be implemented in various forms. For instance, broadcast associated information may include an electronic program guide (EPG) of digital multimedia broadcasting (DMB) and an electronic service guide (ESG) of digital video broadcast-handheld (DVB-H).

The broadcast receiving module 111 may be configured to receive broadcast signals transmitted from various types of broadcast systems. By nonlimiting example, such broadcasting systems may include digital multimedia broadcasting-terrestrial (DMB-T), digital multimedia broadcasting-satellite (DMB-S), digital video broadcast-handheld (DVB-H), digital video broadcast-convergence of broadcasting and mobile services (DVB-CBMS), Open Mobile Alliance Broadcast (OMA-BCAST), the data broadcasting system known as media forward link only (MediaFLO™) and integrated services digital broadcast-terrestrial (ISDB-T). Optionally, the broadcast receiving module 111 can be configured to be suitable for other broadcasting systems as well as the above-noted digital broadcasting systems.

The broadcast signal and/or broadcast associated information received by the broadcast receiving module 111 may be stored in a suitable device, such as the memory 160.

The mobile communication module 112 transmits/receives wireless signals to/from one or more network entities (e.g., a base station, an external terminal, and/or a server) via a mobile network such as GSM (Global System for Mobile communications), CDMA (Code Division Multiple Access), or WCDMA (Wideband CDMA). Such wireless signals may carry audio, video, and data according to text/multimedia messages.

The wireless Internet module 113 supports Internet access for the mobile terminal 100. This module may be internally or externally coupled to the mobile terminal 100. The wireless Internet technology can include WLAN (Wireless LAN), Wi-Fi, Wibro™ (Wireless broadband), Wimax™ (World Interoperability for Microwave Access), HSDPA (High Speed Downlink Packet Access), GSM, CDMA, WCDMA, or LTE (Long Term Evolution) .

Wireless Internet access by Wibro™, HSPDA, GSM, CDMA, WCDMA, or LTE is achieved via a mobile communication network. In this regard, the wireless Internet module 113 may be considered as being a kind of the mobile communication module 112 to perform the wireless Internet access via the mobile communication network.

The short-range communication module 114 facilitates relatively short-range communications. Suitable technologies for implementing this module include radio frequency identification (RFID), infrared data association (IrDA), ultra-wideband (UWB), as well as the networking technologies commonly referred to as Bluetooth™ and ZigBee™, to name a few.

The position-location module 115 identifies or otherwise obtains the location of the mobile terminal 100. According to one embodiment, this module may be implemented with a global positioning system (GPS) module. The GPS module 115 can precisely calculate current 3-dimensional position information based on at least longitude, latitude or altitude and direction (or orientation) by calculating distance information and precise time information from at least three satellites and then applying triangulation to the calculated information. Location information and time information are calculated using three satellites, and errors of the calculated location position and time information are then amended (or corrected) using another satellite. In addition, the GPS module 115 can calculate speed information by continuously calculating a real-time current location.

With continued reference to Figure 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. Furthermore, the processed image frames can be displayed on the display 151.

The image frames processed by the camera 121 can be stored in the memory 160 or can be transmitted to an external recipient via the wireless communication unit 110. Optionally, at least two cameras 121 can be provided in the mobile terminal 100 according to the environment of usage.

The microphone 122 receives an external audio signal while the portable device is in a particular mode, such as phone call mode, recording mode and voice recognition. This audio signal is processed and converted into electronic audio data. The processed audio data is transformed into a format transmittable to a mobile communication base station via the mobile communication module 112 in a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, and a jog switch. Figure 1 also illustrates the user input unit 130 can include a button 136 (hard or soft button) and a touch sensor 137.

The sensing unit 140 provides sensing signals for controlling operations of the mobile terminal 100 using status measurements of various aspects of the mobile terminal. For instance, the sensing unit 140 may detect an open/closed status of the mobile terminal 100, the relative positioning of components (e.g., a display and keypad) of the mobile terminal 100, a change of position (or location) of the mobile terminal 100 or a component of the mobile terminal 100, a presence or absence of user contact with the mobile terminal 100, and an orientation or acceleration/deceleration of the mobile terminal 100.

As an example, a mobile terminal 100 configured as a slide-type mobile terminal is considered. In this configuration, the sensing unit 140 may sense whether a sliding portion of the mobile terminal is open or closed. According to other examples, the sensing unit 140 senses the presence or absence of power provided by the power supply unit 190, and the presence or absence of a coupling or other connection between the interface unit 170 and an external device. According to one embodiment, the sensing unit 140 can include a proximity sensor 141.

The output unit 150 generates output relevant to the senses of sight, hearing, and touch. Furthermore, the output unit 150 includes the display 151, an audio output module 152, an alarm unit 153, a haptic module 154, and a projector module 155.

The display 151 is typically implemented to visually display (output) information associated with the mobile terminal 100. For instance, if the mobile terminal is operating in a phone call mode, the display will generally provide a user interface (Ul) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies. These technologies include, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the displays can be implemented in a transparent or optical transmittive type, i.e., a transparent display. A representative example of the transparent display is the TOLED (transparent OLED). A rear configuration of the display 151 can be implemented as the optical transmittive type as well. In this configuration, a user may be able to see an object located at the rear of a terminal body on a portion of the display 151 of the terminal body.

At least two displays 151 can be provided in the mobile terminal 100 in accordance with one embodiment of the mobile terminal 100. For instance, a plurality of displays can be arranged to be spaced apart from each other or to form a single body on a single face of the mobile terminal 100. Alternatively, a plurality of displays can be arranged on different faces of the mobile terminal 100.

If the display 151 and a sensor for detecting a touch action (hereinafter called 'touch sensor') are configured as a mutual layer structure (hereinafter called 'touchscreen'), the display 151 is usable as an input device as well as an output device. In this instance, the touch sensor can be configured as a touch film, a touch sheet, or a touchpad.

The touch sensor can be configured to convert pressure applied to a specific portion of the display 151 or a variation of capacitance generated from a specific portion of the display 151 to an electronic input signal. Moreover, the touch sensor is configurable to detect pressure of a touch as well as a touched position or size.

If a touch input is made to the touch sensor, a signal(s) corresponding to the touch input is transferred to a touch controller. The touch controller processes the signal(s) and then transfers the processed signal(s) to the controller 180. Therefore, the controller 180 is made aware when a prescribed portion of the display 151 is touched.

Referring to Figure 1, a proximity sensor 141 can be provided at an internal area of the mobile terminal 100 enclosed by the touchscreen or around the touchscreen. The proximity sensor is a sensor that detects a presence or non-presence of an object approaching a prescribed detecting surface or an object existing (or located) around the proximity sensor using an electromagnetic field strength or infrared ray without mechanical contact. Hence, the proximity sensor 141 is more durable than a contact type sensor and also has utility broader than the contact type sensor.

The proximity sensor 141 can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, and an infrared proximity sensor. If the touchscreen includes the electrostatic capacity proximity sensor, it is configured to detect the proximity of a pointer using a variation of an electric field according to the proximity of the pointer. In this configuration, the touchscreen (touch sensor) can be considered as the proximity sensor.

For clarity and convenience of explanation, an action for enabling the pointer approaching the touchscreen to be recognized as placed on the touchscreen may be named 'proximity touch' and an action of enabling the pointer to actually come into contact with the touchscreen may be named 'contact touch'. In addition, a position, at which the proximity touch is made to the touchscreen using the pointer, may mean a position of the pointer vertically corresponding to the touchscreen when the pointer makes the proximity touch.

The proximity sensor detects a proximity touch and a proximity touch pattern (e.g., a proximity touch distance, a proximity touch duration, a proximity touch position, a proximity touch shift state). Information corresponding to the detected proximity touch action and the detected proximity touch pattern can be output to the touchscreen.

The audio output module 152 functions in various modes including a call-receiving mode, a call-placing mode, a recording mode, a voice recognition mode, and a broadcast reception mode to output audio data which is received from the wireless communication unit 110 or is stored in the memory 160. During operation, the audio output module 152 outputs audio relating to a particular function (e.g., call received, message received). The audio output module 152 may be implemented using one or more speakers, buzzers, other audio producing devices, and combinations of these devices.

The alarm unit 153 outputs a signal for announcing the occurrence of a particular event associated with the mobile terminal 100. Typical events include a call received, a message received and a touch input received. The alarm unit 153 can output a signal for announcing the event occurrence by way of vibration as well as video or audio signal. The video or audio signal can be output via the display 151 or the audio output module 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. The strength and pattern of the vibration generated by the haptic module 154 are controllable. For instance, different vibrations can be output in a manner of being synthesized together or can be output in sequence.

The haptic module 154 can generate various tactile effects as well as the vibration. For instance, the haptic module 154 may generate an effect attributed to the arrangement of pins vertically moving against a contact skin surface, an effect attributed to the injection/suction power of air though an injection/suction hole, an effect attributed to the skim over a skin surface, an effect attributed to a contact with an electrode, an effect attributed to an electrostatic force, and an effect attributed to the representation of a hot/cold sense using an endothermic or exothermic device.

The haptic module 154 can be implemented to enable a user to sense the tactile effect through a muscle sense of a finger or an arm as well as to transfer the tactile effect through direct contact. Optionally, at least two haptic modules 154 can be provided in the mobile terminal 100 in accordance with an embodiment of the mobile terminal 100.

The memory 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), and moving pictures. Furthermore, a recent use history or a cumulative use frequency of each data (e.g., use frequency for each phonebook, each message or each multimedia file) can be stored in the memory 160.

Moreover, data for various patterns of vibration and/or sound output in response to a touch input to the touchscreen can be stored in the memory 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory or XD memory), or other similar memory or data storage device. Furthermore, the mobile terminal 100 can operate in association with a web storage for performing a storage function of the memory 160 on the Internet.

The interface unit 170 may be implemented to couple the mobile terminal 100 with external devices. The interface unit 170 receives data from the external devices or is supplied with power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, and/or an earphone port.

The identity module is a chip for storing various kinds of information for authenticating a usage authority of the mobile terminal 100 and can include a User Identify Module (UIM), a Subscriber Identity Module (SIM), and/or a Universal Subscriber Identity Module (USIM). A device having the identity module (hereinafter called 'identity device') can be manufactured as a smart card. Therefore, the identity device is connectible to the mobile terminal 100 via the corresponding port.

When the mobile terminal 100 is connected to an external cradle, the interface unit 170 becomes a passage for supplying the mobile terminal 100 with a power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, and video calls. The controller 180 may include a multimedia module 181 that provides multimedia playback. The multimedia module 181 may be configured as part of the controller 180, or implemented as a separate component.

Moreover, the controller 180 can perform a pattern (or image) recognizing process for recognizing a writing input and a picture drawing input carried out on the touchscreen as characters or images, respectively.

The power supply unit 190 provides power required by various components of the mobile terminal 100. The power may be internal power, external power, or combinations of internal and external power.

Various embodiments described herein may be implemented in a computer-readable medium using, for example, computer software, hardware, or some combination of computer software and hardware. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which performs one or more of the functions and operations described herein. The software codes can be implemented with a software application written in any suitable programming language and may be stored in memory such as the memory 160, and executed by a controller or processor, such as the controller 180.

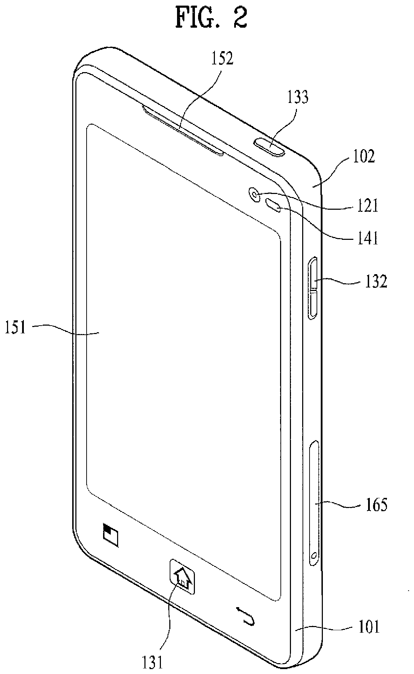

Figure 2 is a front perspective view of a mobile terminal according to one embodiment of the present disclosure. The mobile terminal 100 illustrated in Figure 2 has a bar type terminal body. However, the mobile terminal 100 may be implemented in a variety of different configurations. Examples of such configurations include folder-type, slide-type, rotational-type, swing-type and combinations thereof. For ease of description, the following disclosure will primarily relate to a bar-type mobile terminal 100. However, the present disclosure applies equally to other types of mobile terminals.

Referring to Figure 2, the mobile terminal 100 includes a case (a casing, housing, or cover) constituting an exterior of the mobile terminal. In the present embodiment, the case can be divided into a front case 101 and a rear case 102. Various electric/electronic parts are loaded in a space (volume) provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output module 152, a camera 121, manipulating units 131 and 132, a microphone 122, and an interface unit 170 can be provided at the terminal body, and more particularly, at the front case 101. Manipulating units 131 and 132 are part of the user input unit 130.

The display 151 occupies most of a main face of the front case 101. The audio output module 152 and the camera 121 are provided at an area adjacent to an end portion of the display 151, while the manipulating unit 131 and the microphone 122 are provided at an area adjacent to the other end portion of the display 151. The manipulating unit 132 and the interface unit 170 can be provided at lateral sides of the front and rear cases 101 and 102. Another manipulating unit 133 can be provided on a top portion of the case 102.

The user input unit 130 is manipulated (operated) to receive a command for controlling an operation of the terminal 100. Furthermore, the user input unit 130 may include a plurality of manipulating units 131 and 132. The manipulating units 131 and 132 can be referred to as a manipulating portion and may adopt any tactile mechanism that enables a user to perform a manipulation action by touch.

Content input by manipulating units 131 and 132 can be divided between the two. For instance, a command such as start, end, and scroll is input to first manipulating unit 131. Furthermore, a command for a volume adjustment of sound output from the audio output module 152, or a command for a switching to a touch recognizing mode of the display 151 can be input to second manipulating unit 132.

Meanwhile, such a graphic for pointing at a specific object on a display unit or selecting a menu from the display unit as an arrow, a finger and the like is called a pointer or a cursor. However, the pointer is frequently used to mean a finger, a stylus pen or the like for a touch manipulation and the like. In order to clearly discriminate the pointer and the cursor from each other in this disclosure, a graphic displayed on a display unit is named a cursor and such a physical means for performing a touch, a proximity touch, a gesture and the like as a finger, a stylus pen and the like is named a pointer.

### Sharing of Content Created in the Course of Event

A mobile terminal and controlling method thereof according to one embodiment of the present disclosure are disclosed. In particular, according to one embodiment of the present disclosure, after a terminal of a counterpart in association with a sharing event has been determined, a content created for an event time can be conveniently shared with the determined terminal. In the following description, 'sharing event' mentioned in the present specification may mean a case that a content is created from at least one terminal while users of different terminals stay in a predetermined distance and/or a predetermined location for a predetermined amount of time and/or at a prescribed point in time.

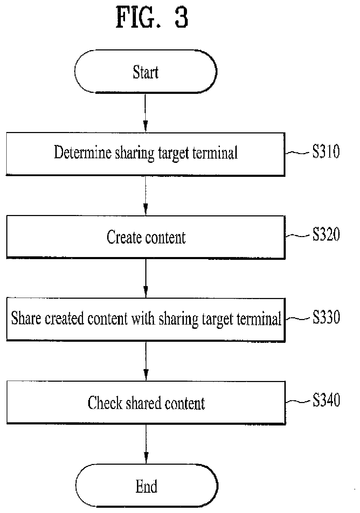

In the following description, a sharing method according to one embodiment of the present disclosure is explained in detail with reference to Figure 3.

Figure 3 is a flowchart for one example of a method of sharing a content created in a mobile terminal according to one embodiment of the present disclosure.

Referring to Figure 3, the mobile terminal is able to determine a sharing target terminal [S310]. In particular, the sharing target terminal can be determined in a manner of being directly selected by a user before/after a sharing event. Alternatively, the controller 180 determines the sharing target terminal by obtaining a location information of the sharing target terminal. For instance, the sharing target terminal can be determined in a manner that a user saves a contact corresponding to a specific terminal by linking the contact to a corresponding schedule while adding a schedule information as a sharing event. For another instance, if a location information of a specific terminal among terminals exchanging location information with each other periodically or on the basis of event belongs to a predetermined range from a current location of the mobile terminal 100, the controller 180 can determine the corresponding terminal as a sharing target terminal automatically or in response to a user's command input after informing a user of this situation. For another instance, after such a unit place having a specific name as a building, a location, an area and the like has been designated, if a prescribed one of terminals sharing location information with each other is determined as located at the designated place over a predetermined time, the controller 180 can determine the corresponding terminal as a sharing target terminal. Similarly, after locations of terminals sharing location information with each other have been visually provided to a user by being sorted by time slots, the user obtains places at which the terminals are located at a specific timing point per time slot. If the user sets up a time interval based on the obtained places, the controller 180 can determine the terminals located within a predetermined range in the corresponding time interval as sharing target terminals. In doing so, when a terminal meeting the set location and the set time interval is determined as a sharing target terminal, it may not be necessary for the mobile terminal 100 to be located at the set location during the corresponding time interval. The reason for this is explained as follows. First of all, even if the mobile terminal 100 is unable to participate in a sharing event physically, a content created from the corresponding sharing event is enabled to be shared with the mobile terminal 100.

Subsequently, a content can be created in a manner of photographing a video or still image through the camera 121, recording an audio through the microphone 122, creating a text or image file in response to a command input through the touchscreen 151 or the user input unit 130, or the like [S320].

If the sharing event ends, the created content can be shared with the sharing target terminal [S330]. In doing so, if there is a schedule information, the shared content may include a content created between a start timing point and an end timing point of a predetermined schedule. Alternatively, in case of using a location information of a sharing target terminal, the shared content may include a content created while the sharing target terminal stays in a predetermined distance from the mobile terminal 100. Of course, the shared content may include a content created for the corresponding time interval by a terminal that meets the set place and the set time interval.

The content sharing method may have a configuration of data P2P transmission using data communication or a file attachment configuration using MMS or email. Moreover, the content sharing method may use an instant messenger supportive of file transmission.

In the present specification, 'sharing' may include the concept for the mobile terminal 100 to receive a content created from a sharing target terminal as well as the concept of transmitting a content created from the mobile terminal 100 to a sharing target terminal. Hence, except a case of sharing a content, which becomes a target of a sharing, selectively in part, 'sharing' can be regarded as having the concept of content synchronization.

Meanwhile, the present step can be triggered if an end timing point of a preset schedule time is reached or the sharing target terminal is detected as getting away from the mobile terminal over a predetermined distance through the location information of the sharing target terminal. Moreover, as mentioned in the foregoing description, in case that the mobile terminal 100 is unable to physically participate in the sharing event, the controller 180 of the mobile terminal 100 can make a request for a sharing of a content created from the corresponding sharing event to the set sharing target terminal as the set time passes.

Thereafter, the user can check the shared content through the output unit 150.

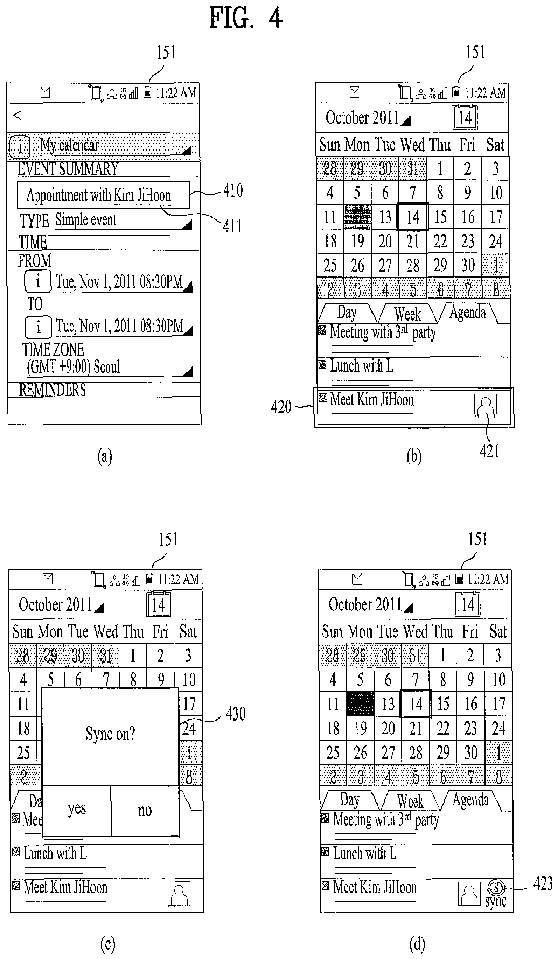

In the following description, a method of specifying a sharing target terminal is explained in detail with reference to Figures 4 to 6.

First of all, a method of specifying a sharing target terminal through a schedule adding process is described with reference to Figure 4. If a sharing target terminal is specified by the present method, although it is unable to obtain a location information of the corresponding terminal, it is advantageous in that a sharing target content set by another sharing target terminal can be specified on the basis of a time designated to a schedule.

Figure 4 is a diagram for one example of a method of selecting a sharing target terminal through a schedule management in a mobile terminal according to one embodiment of the present disclosure.

Referring to Figure 4 (a), as a user applies a command input or a preset condition is met, a user interface for adding a schedule is displayed on the touchscreen 151 of the mobile terminal 100. In doing so, the controller 180 searches the memory 160 for a title inputted to a schedule title box 410. As a result of the search, if a text string (e.g., a name of a counterpart, etc.) corresponding to a contact previously saved in the memory is included in the title, the controller 180 can give a prescribed visual effect 411 to the corresponding text string in a manner of underlining, bold type display and/or the like. In this case, a search target in the memory 160 may include at least one of a phonebook, a messenger friend list, an SNS friend list and the like.

As the schedule addition is complete, referring to Figure 4 (b), an item 420 corresponding to the corresponding schedule can be displayed on a schedule list. In doing so, the controller 180 can control an icon 421 corresponding to the found contact to be displayed. In doing so, if the icon 421 is selected through a touch input, referring to Figure 4 (c), a popup window 430 can be displayed to enable the user to confirm whether to select a terminal corresponding to the corresponding terminal as a sharing target terminal.

If the user selects the corresponding terminal as the sharing target terminal through the popup window 430, referring to Figure 4 (d), the controller 180 can control an icon 423, which shows that a content sharing with the terminal corresponding to the corresponding contact is being performed, to be displayed. Moreover, the controller 180 can recognize the content, which is created in a period designated to the schedule item, as a content to be shared with the selected terminal.

In doing so, the controller 180 may transmit a sharing grant request to the selected sharing target terminal. The controller 180 may request a sharing grant for all sharing events or a sharing grant for a sharing event meeting a specified condition by specifying a time slot/place. Through this, the sharing target terminal does not need to select a sharing target content one by one in the event of each sharing but enables the mobile terminal 100 requesting the sharing to select a content to receive. And, a content desired by a user of the sharing target terminal can be transmitted to the mobile terminal 100 only.

Besides, it is a matter of course that the above-mentioned sharing grant request is applicable to other types of a method of selecting a sharing target terminal.

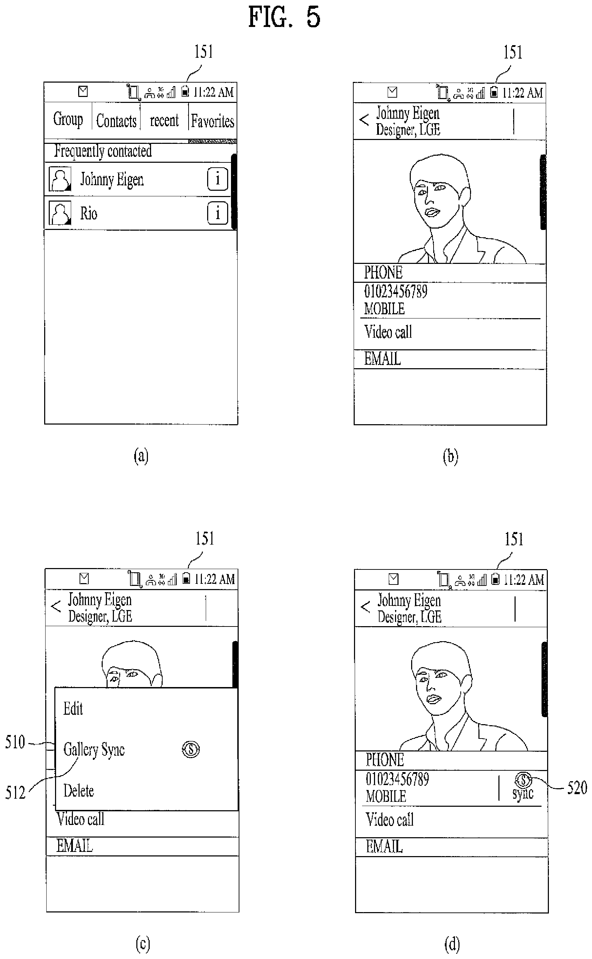

In the following description, a method of selecting a terminal corresponding to a specific contact in a contact list as a sharing target terminal is explained in detail with reference to Figure 5.

Figure 5 is a diagram for one example of a method of selecting a sharing target terminal through a phonebook in a mobile terminal according to one embodiment of the present disclosure.

Referring to Figure 5 (a), as a phonebook application is activated, a contact list may be displayed on the touchscreen 151. In doing so, a user is able to select a contact item 501 corresponding to a terminal intended to be selected as a sharing desired terminal from the contact list. Hence, referring to Figure 5 (b), a detailed information of the selected contact item can be displayed. In doing so, referring to Figure 5 (c), a popup window 510 including functions runnable for the corresponding contact item can be displayed in response to a prescribed menu manipulation. If a content sharing menu (Gallery Sync) 512 is selected from the popup window 510, referring to Figure 5 (d), the controller 180 can control an icon 520, which shows that a content sharing with the terminal corresponding to the corresponding contact is performed, to be displayed. Subsequently, the controller 180 can make a request for a location information to the selected sharing target terminal through the wireless communication unit 110. Hence, the sharing target terminal can transmit its location information to the mobile terminal 100 periodically or in case of arriving at a specific area or timing point. Having obtained the location information of the sharing target terminal, the controller 180 compares its location and distance obtained through the position location module 115 to the obtained location information of the sharing target terminal. As a result of the comparison, if the sharing target terminal is determined as located within a predetermined distance over a predetermined time, the controller 180 may recognize a content created in a period within the predetermined distance as a content to share with the sharing target terminal. On the contrary, after the controller 180 has transmitted a location information of the mobile terminal 100 to the sharing target terminal, the sharing target terminal determines a presence or non-presence of proximity of the mobile terminal 100 and a proximity time and may then transmit a result of the determination to the mobile terminal 100.

Of course, when a schedule including a corresponding contact item is added, even if a location information of a sharing target terminal is not provided, the controller 180 can recognize a content created in a period designated to a schedule item as a content to share with the selected terminal in a manner similar to that shown in Figure 4.

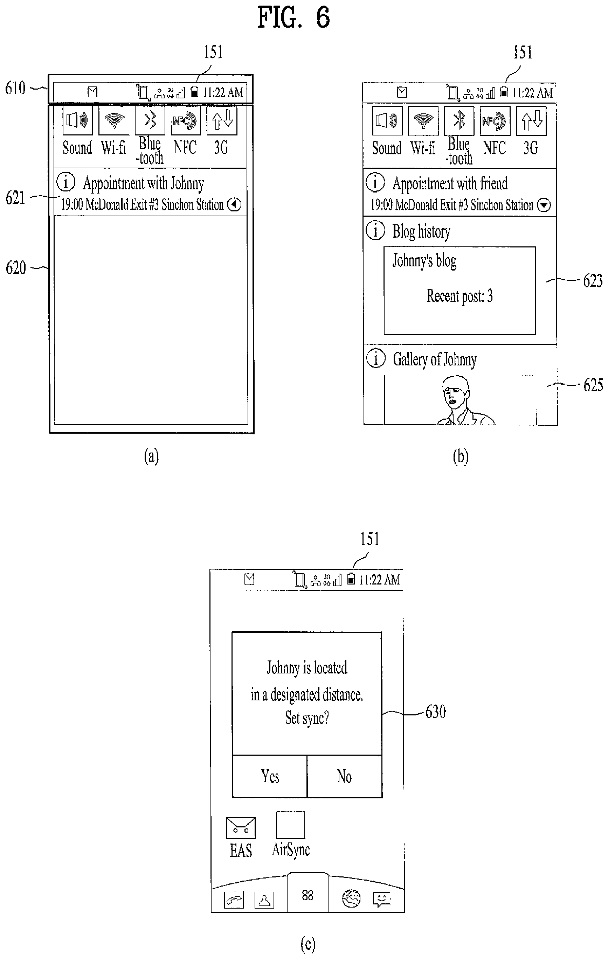

In the following description, an operation of the mobile terminal after selection of a sharing target terminal is explained in detail with reference to Figure 6.

Figure 6 is a diagram for one example of an operation by a method of selecting a sharing target terminal in a mobile terminal according to one embodiment of the present disclosure.

Referring to Figure 6 (a), if a sharing target terminal is selected through a schedule addition, an indicator region 610 of the touchscreen 151 is dragged in a bottom direction, a schedule item 621 may be displayed on a quick panel 620 appearing by sliding down. If the schedule information item 621 is selected, the schedule information item is extended on the quick panel 620 to display a recent SNS information 623 of a counterpart corresponding to the sharing target terminal and/or an image information 625 saved in the memory 160. Through this, a user is able to check a recent state of a counterpart to meet (i.e., a counterpart having a terminal to share a content with) or may be reminded of a memory of the counterpart.

Meanwhile, in case that a sharing target content is determined by a sharing of location information, if a specific one of terminals sharing location information with each other is located in a predetermined distance, referring to Figure 6 (c), the controller 180 can control a popup window 630, which is provided to select whether a content created after a current timing point will be exchanged with the corresponding terminal, to be displayed. Hence, the controller 180 can determine a content to share with the corresponding terminal in response to a selection made by the user. Of course, the controller 180 sets up an additional sharing interval such as per specific time slot, per specific time interval, per moving distance, per stayed area or place, the number of created contents, a size of a created content and the like and is then able to display it per setting.

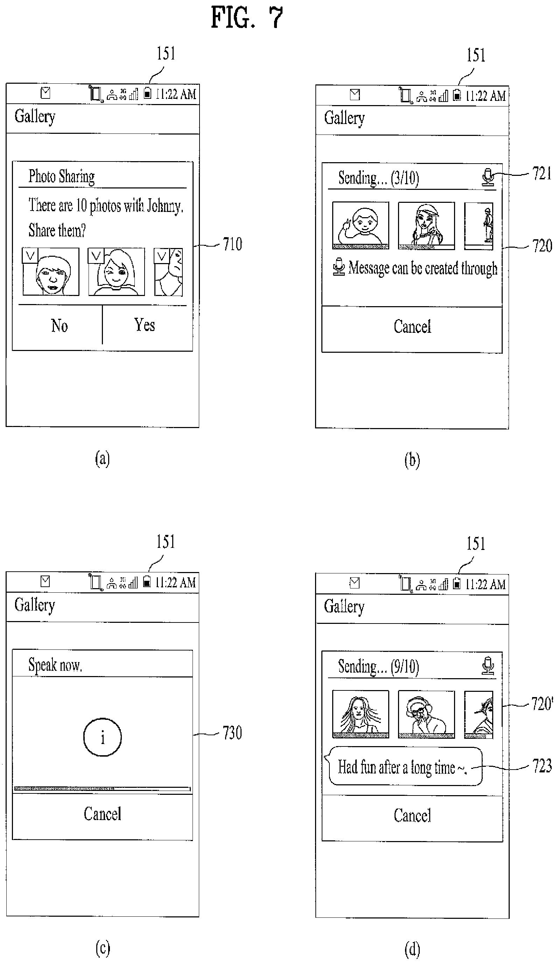

In the following description, a method of transmitting a created content to a sharing target terminal is explained in detail with reference to Figure 7.

Figure 7 is a diagram for one example of a method of transmitting a created content to a sharing target terminal after completion of an event in a mobile terminal according to one embodiment of the present disclosure.

Referring to Figure 7, assume that 10 images are photographed in a sharing event period through the camera 121 of the mobile terminal 100. In this case, the sharing event period may include a period designated to a schedule information or a period determined as a sharing target terminal has stayed in a predetermined distance. And, the sharing event period may include a period determined in further consideration of at least one of a user-set area, a user-set time and a user-set sharing interval.

Referring to Figure 7 (a), as the controller 180 determines that a sharing event has ended or a user's sharing command is inputted, the controller 180 can control a popup window 710, which is provided to determine whether to share contents, to be displayed on the touchscreen 151. If an end time designated to a schedule information expires or a sharing target terminal is not located in a predetermined distance any longer, the controller 180 can determine that the sharing event has ended. In the popup window 710, thumbnails of the created contents, a check box for selecting whether to send a content corresponding to each of the thumbnails and the like can be included.

If the user selects a content to share through the check box and then selects a start menu (i.e., Yes) from the popup window 710, referring to Figure 7 (b), as a transmission of the corresponding content is initiated, a popup window 720 can be displayed to indicate a transmission state. In this case, a microphone icon 721 can be provided to the popup window 720. If the microphone icon 721 is selected, referring to Figure 7 (c), a menu 730 for indicating that a voice is currently inputted from a user can be displayed. If the voice input is complete, referring to Figure 7 (d), a popup window 720' for indicating a transmission state can be displayed again. And, the inputted voice is converted to a text 723 and can be then transmitted to the sharing target terminal together with the corresponding content.

On the other hand, the controller 180 arranges an icon (not shown in the drawing) for paging a virtual keypad is arranged instead of or together with the microphone icon 721. If the corresponding icon is selected, the controller 180 controls the virtual keypad to be displayed on the touchscreen. Hence, a text inputted through the virtual keypad can be transmitted.

Meanwhile, the above-described transmitting process can be performed through a relay server capable of a temporary/permanent contents storing function as well as a device-to-device transmission. In this case, both of the mobile terminal 100 and the sharing target terminal can access the relay server.

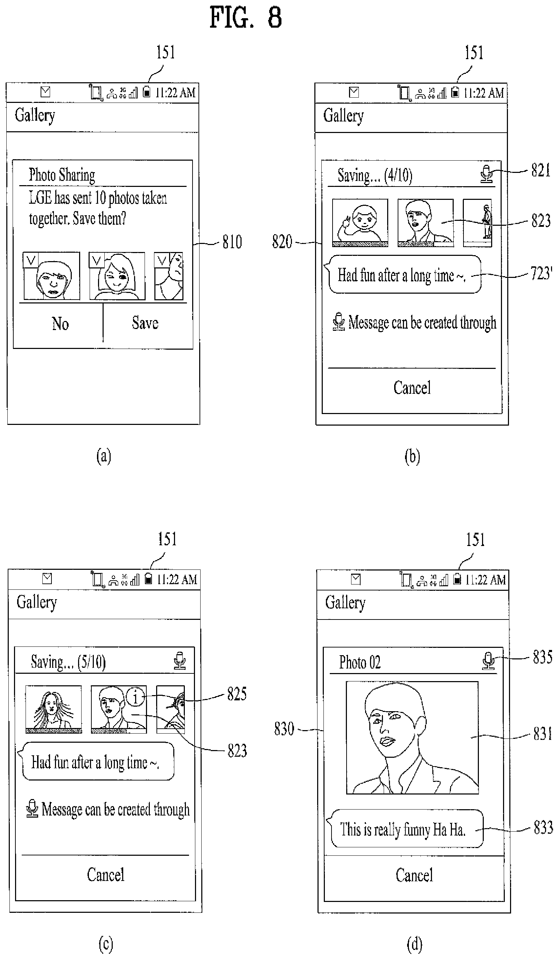

In the following description, a case that a mobile terminal receives contents from a sharing target terminal is explained in detail with reference to Figure 8.

Figure 8 is a diagram for one example of a method of receiving a created content from a sharing target terminal after completion of an event in a mobile terminal according to one embodiment of the present disclosure.

Referring to Figure 8, assume that the 10 images transmitted by the process described with reference to Figure 7 are received by the mobile terminal 100.

Referring to Figure 8 (a), as a content is received from a sharing target terminal, the controller 180 can control a popup window 810, which is provided to determine whether to save the received content, to be displayed on the touchscreen 151. If an end time designated to a schedule information passes, the sharing target terminal is not located in a predetermined distance any longer, or another sharing condition is met, the controller 180 may determine that a sharing event has ended. In the popup window 810, thumbnails of the received contents, a check box for selecting whether to save the content corresponding to each of the thumbnails and the like can be included.

If a user selects a content to save through the check box and then selects a save start menu (Save), referring to Figure 8 (b), the corresponding content starts to be saved in the memory 160 and a pop window 820 indicating a storage state can be displayed. In the popup window 820, a message 723', which was inputted when a content transmission was performed by the sharing target terminal, can be displayed. And, the popup window 820 can be provided with a microphone icon 821 for transmitting a reply message to the sharing target terminal. If the microphone icon 821 is selected, a menu can be displayed to indicate that a voice is being inputted in a manner similar to that shown in Figure 7 (c). And, a text corresponding to the inputted voice or the inputted voice itself can be transmitted to the sharing target terminal.

After a thumbnail 823 corresponding to a specific image has been selected, as the microphone icon 821 is selected and a voice is then inputted, referring to Figure 8 (c), an indicator 825 can be displayed on the corresponding thumbnail to indicate that a message is included. And, the message corresponding to the inputted message can be saved in a manner of being linked to the image corresponding to the corresponding thumbnail. After completion of the contents saving, referring to Figure 8(d), if an image 831 including the message is displayed through a gallery application, a message 833 corresponding to the inputted voice can be displayed together with the image 831. In doing so, a microphone icon 835 may be displayed. And, the user can add a message in a manner of selecting the icon 835 and then inputting a voice. Alternatively, the user can modify a previously inputted message. If the message 833 is selected through a touch input, a virtual keypad for adding or editing a message can be paged.

Meanwhile, the above-described transmitting process can be performed through a relay server capable of a temporary/permanent contents storing function as well as a device-to-device transmission. In this case, both of the mobile terminal 100 and the sharing target terminal can access the relay server.

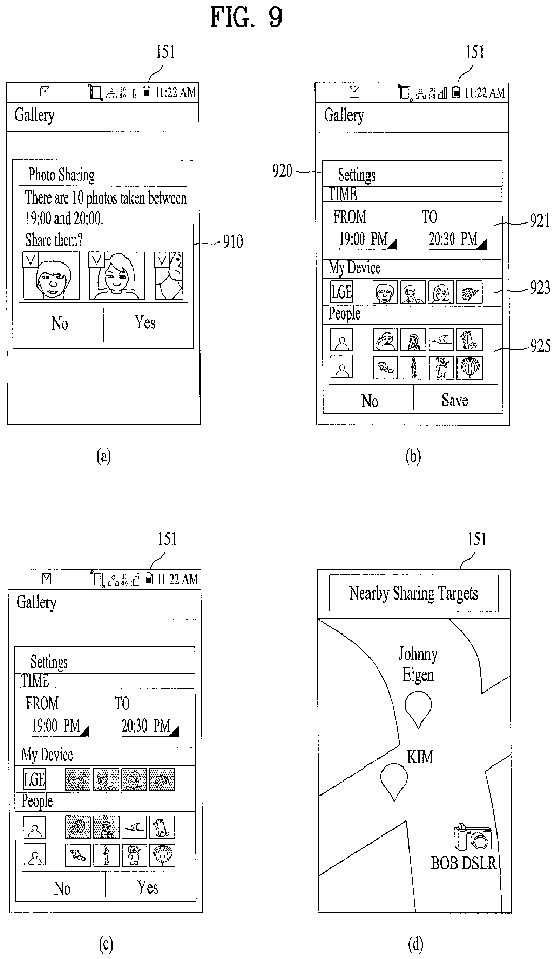

In the following description, a process for sharing a content in case of a presence of at least two sharing target terminals is explained in detail with reference to Figure 9.

Figure 9 is a diagram for one example of a method of sharing a content with a plurality of sharing target terminals after completion of an event in a mobile terminal according to one embodiment of the present disclosure.

Referring to Figure 9, assume that two sharing target terminals are selected (i.e., users of 3 different terminals meet one another together). And, assume that 10 images are photographed through the camera 121 of the mobile terminal 100 for a sharing event period.

Referring to Figure 9 (a), if the controller 180 determines that a sharing event ends or a user inputs a sharing command, the controller 180 may control a popup window 910, which is provided to determine whether share a content, to be displayed on the touchscreen 151. In the popup window 910, thumbnails of the received contents, a check box for selecting whether to transmit the content corresponding to each of the thumbnails and the like can be included.

If the user selects the contents to share with through the check boxes and then selects a sharing start menu (Yes), the controller 180 can transmit the selected contents to the two sharing target terminals.

Alternatively, the user pages a transmission setting menu by a prescribed menu manipulation and is then able to perform both a transmission and a reception. In doing so, referring to Figure 9 (b), the controller 180 transmits a list of contents to be shared from the mobile terminal to the two sharing target terminals, receives lists of receivable contents from the sharing target terminals, and is then able to display the received lists on the touchscreen 151. In particular, in a transmission setting menu popup window 920, a time setting menu for filtering contents to be shared by created times, a list 923 of contents to be transmitted to the sharing target terminal from the mobile terminal and a list 925 of contents to be received from the sharing target terminals can be included.

If the user selects the contents to transmit/receive from each of the lists, referring to Figure 9 (c), a prescribed visual effect may be given to a thumbnail corresponding to each of the contents. Subsequently, if a sharing start command is inputted, the controller 180 may perform a transmission and reception of contents by the settings. Meanwhile, when a location information of the sharing target terminal is shared, if a start time or an end time is selected from the time setting menu 921, referring to Figure 9 (d), a location of each device at the corresponding timing point can be displayed on a map.

Meanwhile, in case that a plurality of sharing target terminals exist, the above-described transmitting/receiving process can be performed through a relay server capable of a temporary/permanent contents storing function as well as a device-to-device transmission. In this case, both of the mobile terminal 100 and a plurality of the sharing target terminals can access the relay server. In this case, the sharing target contents can be referred to in a folder type shared with at least three, by a group, or for each connection account.

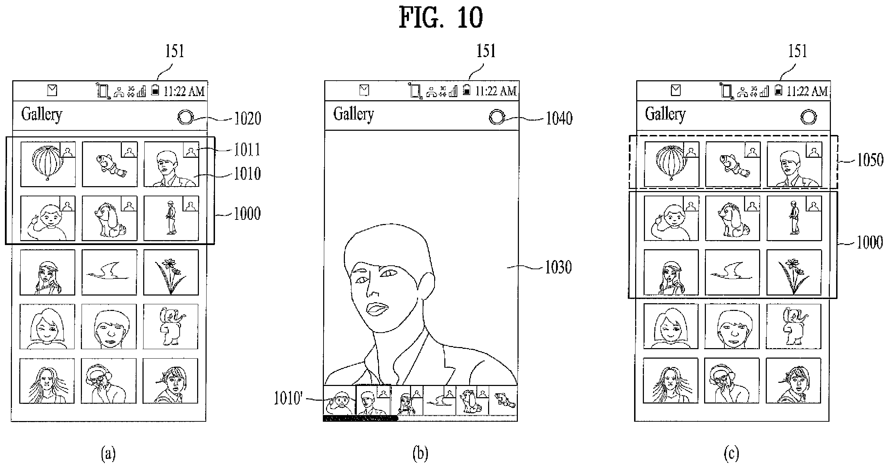

In the following description, a method of checking a shared content is explained in detail with reference to Figures 10 to 14.

Figure 10 is a diagram for one example of a configuration for displaying a sharing target content in a mobile terminal according to one embodiment of the present disclosure.

Referring to Figure 10, assume that 6 images are created as sharing target contents in a sharing event period. Assume that 3 images are not shared yet despite being created as the sharing target contents in the sharing event period from a sharing target terminal.

Referring to Figure 10 (a), as a gallery application is activated, thumbnails respectively corresponding to a plurality of image files can be displayed on the touchscreen 151. In doing so, an indicator 1011 indicating a corresponding sharing target content can be displayed on each of thumbnails 1000 respectively corresponding to images that are sharing target contents. In this case, if a sharing of the sharing target terminal is not performed, a share icon 1020 can be displayed on a top end of the touchscreen.

If a specific thumbnail 1010 is selected, referring to Figure 10 (b), an image 1030 corresponding to the selected thumbnail 1010 can be displayed by being enlarged. And, a thumbnail list can be displayed on a bottom end of the touchscreen. And, an outline effect can be displayed on the selected thumbnail 1010' to indicate that the corresponding thumbnail has been selected. In this case, if a sharing of the sharing target terminal is not performed, a share icon 1040 can be displayed on a top end of the touchscreen.

If the share icon 1020 is selected in Figure 10 (a) or the share icon 1040 is selected in Figure 10 (b), 6 images corresponding to the sharing target contents are sent to the sharing target terminal and 3 images can be received from the sharing target terminal. Hence, referring to Figure 10 (c), thumbnails 1050 corresponding to the newly received 3 images can be displayed on the thumbnail list. Of course, when the share icon is selected, the process shown in Figure 7 or Figure 9 can be performed.

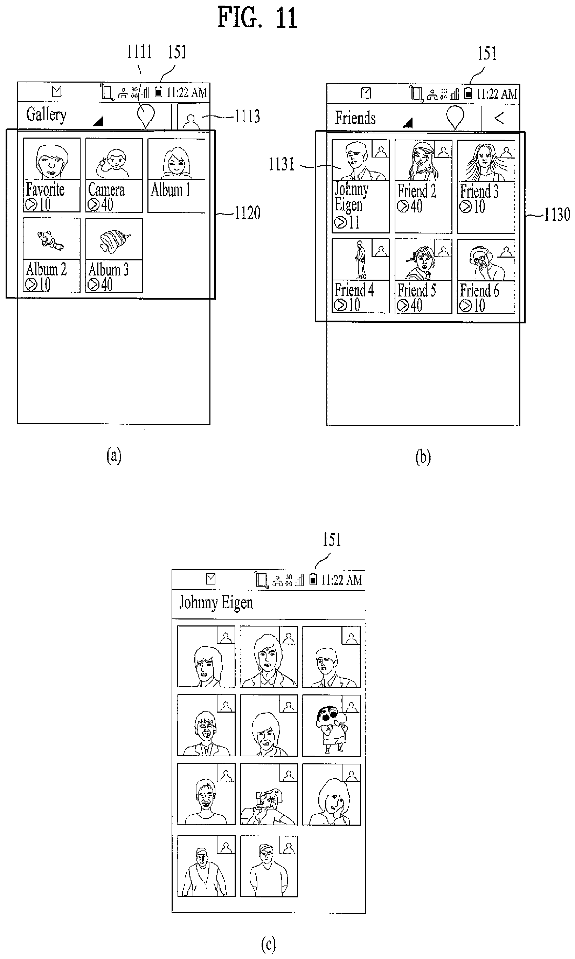

Figure 11 is a diagram for one example of a configuration for displaying a sharing target content per contact in a mobile terminal according to one embodiment of the present disclosure.

Referring to Figure 11 (a), as a gallery application is activated, folders 1120 including image files can be displayed. A per-area sorting menu 1111 and a per-contact sorting menu 1113 can be displayed above a region for displaying the folders.

If the per-contact sorting menu 1113 is selected, referring to Figure 11 (b), folders 1130 including images can be displayed per contact corresponding to a sharing target terminal.

If a contact folder 1131 corresponding to a specific sharing target terminal is selected, referring to Figure 11 (c), images related to the corresponding sharing target terminal (i.e., images transmitted as sharing target contents to the corresponding terminal or images received from the corresponding terminal) can be displayed.

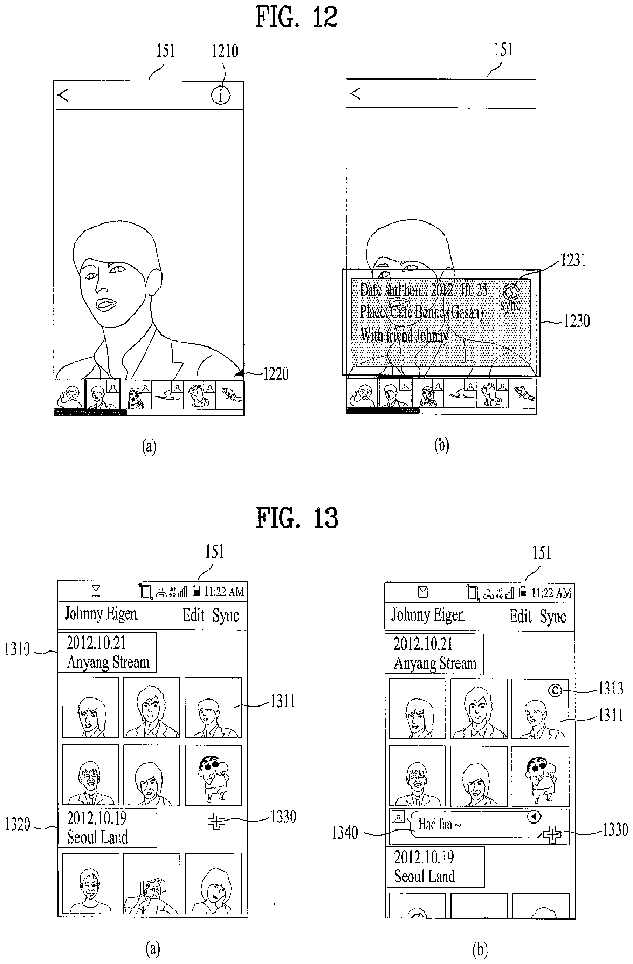

Figure 12 is a diagram for one example of a configuration for displaying side information of a sharing target content in a mobile terminal according to one embodiment of the present disclosure.

Referring to Figure 12 (a), if a specific thumbnail is selected in a situation shown in Figure 11 (c), an image corresponding to the selected thumbnail can be displayed in a manner of being enlarged. If an information icon 1210 provided to a top end of the touchscreen 151 or an indicator 1220 provided to a right bottom end of the touchscreen 151 is selected, referring to Figure 12 (b), a side information popup window 1230 may be displayed. In the side information popup window 1230, an information corresponding to the created date and hour of a corresponding content, an information corresponding to a created place of the corresponding content and an information corresponding to a sharing target terminal can be included. If a sharing of the corresponding content is not complete yet, a share icon 1231 can be displayed. If the share icon 1231 is selected, the corresponding content can be transmitted to the sharing target terminal. Meanwhile, this side information can be included as meta information in a header of a content file or may be saved in a file separate from the content file. In case that the side information is saved in the file separate from the content file, when the corresponding content is shared, the file including the side information can be shared as well. Moreover, the place information included in the side information can refer to a location information obtained in case of content creation or a place name included in a tile of a sharing event schedule information. Of course, each side information may be edited after selected by a user.

Figure 13 is a diagram for one example of a configuration for displaying a sharing target content per event place in a mobile terminal according to one embodiment of the present disclosure.

Referring to Figure 13 (a), if a per-area sorting menu 1111 is selected in the situation shown in Figure 11 (a), images can be displayed by being sorted by area names 1310 and 1320 related to a sharing event. In this case, in determining an area related to the sharing event, the controller 180 can refer to a content file or a separate file including side information of a content for side information of the corresponding content.

After a specific thumbnail 1311 has been selected, if a comment add button 1330 is selected, a voice input or a text inputted through a virtual keypad can be set for an image corresponding to the selected thumbnail. Hence, referring to Figure 13(b), an indicator 1313 can be displayed on the corresponding thumbnail 1311 to indicate that a comment has been set. If the indicator 1313 is selected, a comment content 1340 can be displayed below.

Although the description with reference to Figure 13 is made on the assumption of the per-place sharing sorting, it is a matter of course that contents can be sorted by time slots.

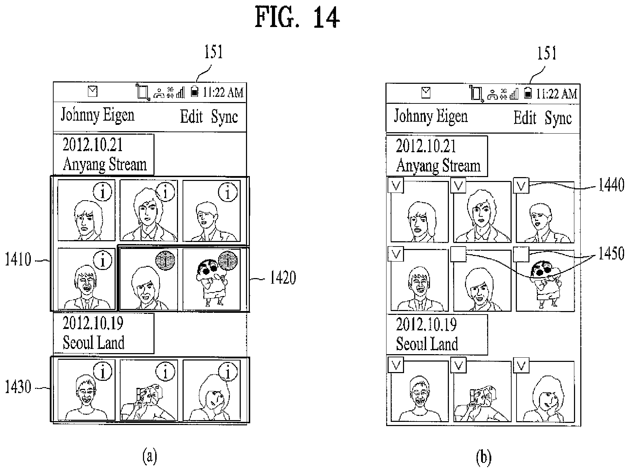

In the following description, when a list of a plurality of sharing target contents is displayed together, a method of checking that which content(s) is shared or not is explained in detail with reference to Figure 14.

Figure 14 is a diagram for one example of a configuration for displaying a sharing target content differently depending on whether the sharing target terminal is shared in a mobile terminal according to one embodiment of the present disclosure.

Referring to Figure 14 (a), when thumbnails respectively corresponding to a plurality of sharing target contents are displayed, an indicator of a different type can be displayed on each of the thumbnails depending on a presence or non-presence of being shared in response to a prescribed menu manipulation. For instance, an indicator given to each of the thumbnails 1410 and 1430 corresponding to the shared contents can be displayed in a manner of being brighter than an indicator given to each of the thumbnails 1420 corresponding to unshared contents. For another instance, referring to Figure 14 (b), a check mark is applied to a check box 1440 displayed on a thumbnail corresponding to a shared content and a check mark may not be applied to a check box 1450 displayed on a thumbnail corresponding to an unshared content.

Through the above-described methods, a user can conveniently check whether each of a plurality of sharing target contents is shared. Thereafter, the user can enable an unshared content to be shared by inputting a sharing command in a prescribed configuration.

As embodied and broadly described herein, a mobile terminal according to one embodiment of the present disclosure may include a wireless communication unit and a controller determining at least one sharing target terminal located in a predetermined distance from the mobile terminal or at a preset place over a predetermined time, the controller, when a period for the determined at least one sharing target terminal to be located in the predetermined distance or at the preset place expires, controlling the contents created by the mobile terminal for the period and the contents created by the determined at least one sharing target terminal to be shared with the determined at least one sharing target terminal in part at least through the wireless communication unit.

In another aspect of the present disclosure, a method of controlling a mobile terminal according to one embodiment of the present disclosure may include the steps of determining at least one sharing target terminal located in a predetermined distance from the mobile terminal or at a preset place over a predetermined time and when a period for the determined at least one sharing target terminal to be located in the predetermined distance or at the preset place expires, sharing the contents created by the mobile terminal for the period and the contents created by the determined at least one sharing target terminal with the determined at least one sharing target terminal in part at least.

Accordingly, the present disclosure provides the following effects and/or features.

First of all, the present disclosure determines a terminal of a meeting counterpart through schedule information or location information, thereby facilitating a content created in the course of the meeting to be shared with the determined terminal.

Particularly, when the content is shared with the counterpart terminal, a user can attach such a side information as a comment and the like and is also able to check previously shared contents by sorting then by counterparts or meeting schedules.

It will be apparent to those skilled in the art that various modifications and variations can be specified into other form(s) without departing from the scope of the disclosures.

According to one embodiment of the present disclosure, the above-described methods can be implemented in a program recorded medium as processor-readable codes. The processor-readable media include all kinds of recording devices in which data readable by a processor are saved. The processor-readable media include ROM, RAM, CD-ROM, magnetic tapes, floppy discs, optical data storage devices, and the like for example and also include carrier-wave type implementations (e.g., transmission via Internet).

The aforementioned embodiments are achieved by combination of structural elements and features of the present disclosure in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present disclosure.

It will be apparent to those skilled in the art that various modifications and variations can be made in the present disclosure without departing from the scope of the disclosures. Thus, it is intended that the present disclosure covers the modifications and variations of this disclosure provided they come within the scope of the appended claims.

## Claims

1. A mobile terminal (100) comprising:
a memory (160) configured to store schedule information including contact information corresponding to a sharing target terminal and a sharing time period for sharing a plurality of first contents with the sharing target terminal;
a wireless communication unit (110); and
a controller (180) configured to control content sharing with the sharing target terminal through the wireless communication unit (110),
**characterized in that** the controller (180) is further configured to:
identify the sharing target terminal among a plurality of terminals for content sharing, based on at least one of a position of the sharing target terminal within a prescribed distance from the mobile terminal (100),
create the plurality of first contents during a time period in which the sharing target terminal corresponding to the contact information included in the stored schedule information is located within the prescribed distance from the mobile terminal, and
when a current time of the mobile terminal corresponds to the sharing time period included in the stored schedule information and the sharing target terminal deviates away from the prescribed distance from the mobile terminal, transmit the plurality of first contents created by the mobile terminal during the time period to the sharing target terminal, and
receive a plurality of second contents created by the sharing target terminal during the same time period from the remote terminal.

2. The mobile terminal (100) of claim 1, wherein a data path with the sharing target terminal is established through the wireless communication unit (110), and wherein while the first or second contents are shared through the established data path, the controller (180) is further configured to transmit a comment associated with the shared contents between the sharing target terminal and the mobile terminal (100).

3. The mobile terminal (100) of claim 1, further comprising:
a user input device (130, 151) configured to receive a command to designate a candidate terminal; and
a position location module configured to obtain a first location information corresponding to a location of the mobile terminal (100),
wherein when a second location information is received from the candidate terminal through the wireless communication unit (110), the candidate terminal is assigned as the sharing target terminal for content sharing using the first location information and the second location information.

4. The mobile terminal (100) of claim 3, wherein a distance between the candidate terminal and the mobile terminal (100) is determined using the first location information and the second location information.

5. The mobile terminal (100) of claim 1, further comprising a touchscreen (151), wherein the controller (180) is further configured to:
receive a list of the second contents created by the sharing target terminal the wireless communication unit (110),
display the received list on the touchscreen (151), and
receive a selected one of the second contents from the list.

6. The mobile terminal (100) of claim 1, further comprising a touchscreen (151) configured to display the first contents created by the mobile terminal (100) during the time period, wherein the first contents created by the mobile terminal (100) during the time period are displayed in a list in a manner in which a first one of the first contents shared with the sharing target terminal and a second one of the first contents not shared with the sharing target terminal are visually discriminated from each other.

7. The mobile terminal (100) of any one of the preceding claims, further comprising;
a microphone (122); and
a camera (121),
wherein each of the contents comprises at least one selected from the group consisting of an audio content created through the microphone (122), a still image created through the camera (121) and a video created through the camera (121).

8. A method of sharing contents in a mobile terminal (100), comprising:
setting schedule information including contact information corresponding to a sharing target terminal and a sharing time period for sharing a plurality of first contents with the sharing target terminal;
identifying the sharing target terminal among a plurality of terminals for content sharing, based on at least one of a position of the sharing target terminal within a prescribed distance from the mobile terminal (100);
creating the plurality of first contents during a time period in which the sharing target terminal corresponding to the contact information included in the stored schedule information is located within the prescribed distance from the mobile terminal (100); and
when a current time of the mobile terminal corresponds to the sharing time period included in the stored schedule information and the sharing target terminal deviates away from the prescribed distance from the mobile terminal, transmitting the plurality of first contents created by the mobile terminal (100) during the time period to the sharing target terminal, and
receiving a plurality of second contents created by the sharing target terminal during the same time period from the sharing target terminal.

9. The method of claim 8, further comprising:
establishing a data path with the sharing target terminal, and
while the first or second contents are shared through the established data path, exchanging a comment associated with the shared contents between the sharing target terminal and the mobile terminal.

10. The method of any one of the preceding claims, further comprising:
registering a candidate terminal;
receiving a first location information from the candidate terminal;
obtaining a second location information that corresponds to a location of the mobile terminal (100); and
determining whether the sharing target terminal is located within the prescribed distance from the mobile terminal (100) using the first location information and the second location information.

11. The method of claim 10, further comprising determining a distance between the candidate terminal and the mobile terminal (100) using the first location information and the second location information.

## Patentansprüche

1. Mobiles Endgerät (100), das Folgendes umfasst:
einen Speicher (160), der konfiguriert ist, Zeitplaninformationen zu speichern, die Kontaktinformationen enthalten, die einem Endgerät gemeinsamer Nutzung und einem Zeitraum gemeinsamer Nutzung zum gemeinsamen Nutzen mehrerer erster Inhalte mit dem Endgerät gemeinsamer Nutzung entsprechen;
eine drahtlose Kommunikationseinheit (110); und
eine Steuereinheit (180), die konfiguriert ist, das gemeinsame Nutzen von Inhalten mit dem Endgerät gemeinsamer Nutzung mittels der drahtlosen Kommunikationseinheit (110) zu steuern,
**dadurch gekennzeichnet, dass** die Kommunikationseinheit (180) ferner konfiguriert ist zum
Identifizieren des Endgeräts gemeinsamer Nutzung unter mehreren Endgeräten zum gemeinsamen Nutzen von Inhalten auf der Grundlage mindestens einer Position des Endgeräts gemeinsamer Nutzung innerhalb einer vorgegebenen Entfernung von dem mobilen Endgerät (100),
Erzeugen der mehreren ersten Inhalte während eines Zeitraums, in dem sich das Endgerät gemeinsamer Nutzung, das den Kontaktinformationen, die in den gespeicherten Zeitplaninformationen enthalten sind, entspricht, innerhalb der vorgegebenen Entfernung von dem mobilen Endgerät befindet, und
dann, wenn eine aktuelle Zeit des mobilen Endgeräts dem Zeitraum gemeinsamer Nutzung, der in den gespeicherten Zeitplaninformationen enthalten ist, entspricht und das Endgerät gemeinsamer Nutzung die vorgegebene Entfernung von dem mobilen Endgerät übersteigt, Senden der mehreren ersten Inhalte, die durch das mobile Endgerät während des Zeitraums erzeugt werden, an das Endgerät gemeinsamer Nutzung und
Empfangen mehrerer zweiter Inhalte, die von dem Endgerät gemeinsamer Nutzung während desselben Zeitraums erzeugt werden, von dem entfernten Endgerät.

2. Mobiles Endgerät (100) nach Anspruch 1, wobei mittels der drahtlosen Kommunikationseinheit (110) ein Datenpfad mit dem Endgerät gemeinsamer Nutzung aufgebaut wird, wobei, während die ersten oder die zweiten Inhalte mittels des aufgebauten Datenpfades gemeinsam genutzt werden, die Steuereinheit (180) ferner konfiguriert ist, einen Kommentar, der den gemeinsam genutzten Inhalten zugeordnet ist, zwischen dem Endgerät gemeinsamer Nutzung und dem mobilen Endgerät (100) zu übertragen.

3. Mobiles Endgerät (100) nach Anspruch 1, das ferner Folgendes umfasst:
ein Anwenderendgerät (130, 151), das konfiguriert ist, eine Anweisung, ein Kandidatenendgerät festzulegen, zu empfangen; und
ein Positionsbestimmungsmodul, das konfiguriert ist, erste Positionsinformationen, die einer Position des mobilen Endgeräts (100) entsprechen, zu empfangen,
wobei dann, wenn zweite Positionsinformationen durch die drahtlose Kommunikationseinheit (110) von dem Kandidatenendgerät empfangen werden, das Kandidatenendgerät als das Endgerät gemeinsamer Nutzung zum gemeinsamen Nutzen von Inhalten unter Verwendung der ersten Positionsinformationen und der zweiten Positionsinformationen zugewiesen wird.

4. Mobiles Endgerät (100) nach Anspruch 3, wobei eine Entfernung zwischen dem Kandidatenendgerät und dem mobilen Endgerät (100) unter Verwendung der ersten Positionsinformationen und der zweiten Positionsinformationen bestimmt wird.

5. Mobiles Endgerät (100) nach Anspruch 1, das ferner einen Berührungsbildschirm (151) umfasst, wobei die Steuereinheit (180) ferner konfiguriert ist zum
Empfangen einer Liste der zweiten Inhalte, die von dem Endgerät gemeinsamer Nutzung erzeugt wurde, bei der drahtlosen Kommunikationseinheit (110),
Anzeigen der empfangenen Liste auf dem Berührungsbildschirm (151) und Empfangen eines ausgewählten der zweiten Inhalte von der Liste.

6. Mobiles Endgerät (100) nach Anspruch 1, das ferner einen Berührungsbildschirm (151) umfasst, der konfiguriert ist, die ersten Inhalte, die durch das mobile Endgerät (100) während des Zeitraums erzeugt werden, anzuzeigen, wobei die ersten Inhalte, die von dem mobilen Endgerät (100) während des Zeitraums erzeugt werden, in Form einer Liste angezeigt werden, in der ein erster der ersten Inhalte, der mit dem Endgerät gemeinsamer Nutzung gemeinsam genutzt wird, und ein zweiter der ersten Inhalte, die nicht mit dem Endgerät gemeinsamer Nutzung gemeinsam genutzt werden, visuell voneinander unterschieden sind.

7. Mobiles Endgerät (100) nach einem der vorhergehenden Ansprüche, das ferner Folgendes umfasst:
ein Mikrophon (122); und
eine Kamera (121),
wobei jeder der Inhalte mindestens ein Element der Gruppe umfasst, die aus einem Audioinhalt, der mittels des Mikrophons (122) erzeugt wurde, einem Standbild, das mittels der Kamera (121) erzeugt wurde, und einem Video, das mittels der Kamera (121) erzeugt wurde, besteht.

8. Verfahren zum gemeinsamen Nutzen von Inhalt in einem mobilen Endgerät (100), das Folgendes umfasst:
Festlegen von Zeitplaninformationen, die Kontaktinformationen enthalten, die einem Endgerät gemeinsamer Nutzung und einem Zeitraum gemeinsamer Nutzung zum gemeinsamen Nutzen mehrerer erster Inhalte mit dem Endgerät gemeinsamer Nutzung entsprechen;
Identifizieren des Endgeräts gemeinsamer Nutzung unter mehreren Endgeräten zum gemeinsamen Nutzen von Inhalten auf der Grundlage mindestens einer Position des Endgeräts gemeinsamer Nutzung innerhalb einer vorgegebenen Entfernung von dem mobilen Endgerät (100);
Erzeugen der mehreren ersten Inhalte während eines Zeitraums, in dem sich das Endgerät gemeinsamer Nutzung, das den Kontaktinformationen, die in den gespeicherten Zeitplaninformationen enthalten sind, entspricht, innerhalb der vorgegebenen Entfernung von dem mobilen Endgerät (100) befindet, und
dann, wenn eine aktuelle Zeit des mobilen Endgeräts dem Zeitraum gemeinsamer Nutzung, der in den gespeicherten Zeitplaninformationen enthalten ist, entspricht und das Endgerät gemeinsamer Nutzung die vorgegebene Entfernung von dem mobilen Endgerät übersteigt, Senden der mehreren ersten Inhalte, die durch das mobile Endgerät (100) während des Zeitraums erzeugt werden, an das Endgerät gemeinsamer Nutzung und
Empfangen mehrerer zweiter Inhalte, die von dem Endgerät gemeinsamer Nutzung während desselben Zeitraums erzeugt werden, von dem Endgerät gemeinsamer Nutzung.

9. Verfahren nach Anspruch 8, das ferner Folgendes umfasst:
Aufbauen eines Datenpfades mit dem Endgerät gemeinsamer Nutzung und
während die ersten oder die zweiten Inhalte mittels des aufgebauten Datenpfades gemeinsam genutzt werden, Austauschen eines Kommentars, der den gemeinsam genutzten Inhalten zugeordnet ist, zwischen dem Endgerät gemeinsamer Nutzung und dem mobilen Endgerät.

10. Verfahren nach einem der vorhergehenden Ansprüche, das ferner Folgendes umfasst:
Registrieren eines Kandidatenendgeräts;
Empfangen erster Positionsinformationen von dem Kandidatenendgerät;
Erhalten von zweiten Positionsinformationen, die einem Ort des mobilen Endgeräts (100) entsprechen; und
Bestimmen, ob sich das Endgerät gemeinsamer Nutzung innerhalb der vorgegebenen Entfernung von dem mobilen Endgerät (100) befindet, unter Verwendung der ersten Positionsinformationen und der zweiten Positionsinformationen.

11. Verfahren nach Anspruch 10, das ferner das Bestimmen einer Entfernung zwischen dem Kandidatenendgerät und dem mobilen Endgerät (100) unter Verwendung der ersten Positionsinformationen und der zweiten Positionsinformationen umfasst.

## Revendications

1. Terminal mobile (100) comprenant :
une mémoire (160) configurée pour mémoriser des informations de programmation comprenant des informations de contact correspondant à un terminal cible de partage et une période de temps de partage pour partager une pluralité de premiers contenus avec le terminal cible de partage ;
une unité de communication sans fil (110) ; et
un organe de commande (180) configuré pour commander un partage de contenus avec le terminal cible de partage par l'intermédiaire de l'unité de communication sans fil (110),
**caractérisé en ce que** l'organe de commande (180) est en outre configuré pour effectuer :
l'identification du terminal cible de partage parmi une pluralité de terminaux pour un partage de contenus, sur la base d'au moins l'une d'une position du terminal cible de partage à au plus une distance prescrite du terminal mobile (100),
la création de la pluralité de premiers contenus pendant une période de temps au cours de laquelle le terminal cible de partage correspondant aux informations de contact incluses dans les informations de programmation mémorisées est situé à au plus la distance prescrite du terminal mobile, et
lorsqu'un temps actuel du terminal mobile correspond à la période de temps de partage incluse dans les informations de programmation mémorisées et le terminal cible de partage s'éloigne de la distance prescrite du terminal mobile, la transmission de la pluralité de premiers contenus créés par le terminal mobile pendant la période de temps à destination du terminal cible de partage, et
la réception d'une pluralité de deuxièmes contenus créés par le terminal cible de partage pendant la même période de temps en provenance du terminal distant.

2. Terminal mobile (100) selon la revendication 1, dans lequel une voie de données avec le terminal cible de partage est établie par l'intermédiaire de l'unité de communication sans fil (110), et dans lequel, pendant que les premiers ou deuxièmes contenus sont partagés par l'intermédiaire de la voie de données établie, l'organe de commande (180) est en outre configuré pour effectuer la transmission d'un commentaire associé aux contenus partagés entre le terminal cible de partage et le terminal mobile (100).

3. Terminal mobile (100) selon la revendication 1, comprenant en outre :
un dispositif d'entrée d'utilisateur (130, 151) configuré pour recevoir une commande pour désigner un terminal candidat ; et
un module d'emplacement de position configuré pour obtenir une première information d'emplacement correspondant à un emplacement du terminal mobile (100),
dans lequel, lorsqu'une deuxième information d'emplacement est reçue en provenance du terminal candidat par l'intermédiaire de l'unité de communication sans fil (110), le terminal candidat est assigné en tant que terminal cible de partage pour un partage de contenus en utilisant la première information d'emplacement et la deuxième information d'emplacement.

4. Terminal mobile (100) selon la revendication 3, dans lequel une distance entre le terminal candidat et le terminal mobile (100) est déterminée en utilisant la première information d'emplacement et la deuxième information d'emplacement.

5. Terminal mobile (100) selon la revendication 1, comprenant en outre un écran tactile (151), dans lequel l'organe de commande (180) est en outre configuré pour effectuer :
la réception d'une liste des deuxièmes contenus créés par le terminal cible de partage en provenance de l'unité de communication sans fil (110),
l'affichage de la liste reçue sur l'écran tactile (151), et
la réception de l'un sélectionné des deuxièmes contenus en provenance de la liste.

6. Terminal mobile (100) selon la revendication 1, comprenant en outre un écran tactile (151) configuré pour afficher les premiers contenus créés par le terminal mobile (100) pendant la période de temps, dans lequel les premiers contenus créés par le terminal mobile (100) pendant la période de temps sont affichés dans une liste de manière à séparer visuellement un premier des premiers contenus qui est partagé avec le terminal cible de partage et un deuxième des premiers contenus qui n'est pas partagé avec le terminal cible de partage.

7. Terminal mobile (100) selon l'une quelconque des revendications précédentes, comprenant en outre :
un microphone (122) ; et
une caméra (121),
dans lequel chacun des contenus comprend au moins l'un sélectionné dans le groupe se composant d'un contenu audio créé par l'intermédiaire du microphone (122), d'une image fixe créée par l'intermédiaire de la caméra (121) et d'une vidéo créée par l'intermédiaire de la caméra (121).

8. Procédé de partage de contenus dans un terminal mobile (100), comprenant :
le réglage d'informations de programmation comprenant des informations de contact correspondant à un terminal cible de partage et une période de temps de partage pour partager une pluralité de premiers contenus avec le terminal cible de partage ;
l'identification du terminal cible de partage parmi une pluralité de terminaux pour un partage de contenus, sur la base d'au moins l'une d'une position du terminal cible de partage à au plus une distance prescrite du terminal mobile (100) ;
la création de la pluralité de premiers contenus pendant une période de temps au cours de laquelle le terminal cible de partage correspondant aux informations de contact incluses dans les informations de programmation mémorisées est situé à au plus la distance prescrite du terminal mobile (100) ; et lorsqu'un temps actuel du terminal mobile correspond à la période de temps de partage incluse dans les informations de programmation mémorisées et le terminal cible de partage s'éloigne de la distance prescrite du terminal mobile, la transmission de la pluralité de premiers contenus créés par le terminal mobile (100) pendant la période de temps à destination du terminal cible de partage, et
la réception d'une pluralité de deuxièmes contenus créés par le terminal cible de partage pendant la même période de temps en provenance du terminal cible de partage.

9. Procédé selon la revendication 8, comprenant en outre :
l'établissement d'une voie de données avec le terminal cible de partage, et
pendant que les premiers ou deuxièmes contenus sont partagés par l'intermédiaire de la voie de données établie, l'échange d'un commentaire associé aux contenus partagés entre le terminal cible de partage et le terminal mobile.

10. Procédé selon l'une quelconque des revendications précédentes, comprenant en outre :
l'enregistrement d'un terminal candidat ;
la réception d'une première information d'emplacement en provenance du terminal candidat ;
l'obtention d'une deuxième information d'emplacement correspondant à un emplacement du terminal mobile (100) ; et
la détermination si le terminal cible de partage est situé à au plus la distance prescrite du terminal mobile (100) en utilisant la première information d'emplacement et la deuxième information d'emplacement.

11. Procédé selon la revendication 10, comprenant en outre la détermination d'une distance entre le terminal candidat et le terminal mobile (100) en utilisant la première information d'emplacement et la deuxième information d'emplacement.
